(19) Europäisches Patentamt
European Patent Office
Office européen des brevets

(11) **EP 4 122 986 A1**

(12) **EUROPEAN PATENT APPLICATION**

(43) Date of publication:
**25.01.2023 Bulletin 2023/04**

(21) Application number: **21382661.3**

(22) Date of filing: **21.07.2021**

(51) International Patent Classification (IPC):
**C08L 35/02** (2006.01)     **C08L 67/06** (2006.01)

(52) Cooperative Patent Classification (CPC):
(C-Sets available)
**C08L 35/02; C08L 67/06**     (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Ideko, S.Coop.**
**20870 Elgoibar Guipuzcoa (ES)**

(72) Inventors:
• **VALLEJO RASERO, FRANCISCO JAVIER**
**20870 ELGOIBAR (GUIPUZCOA) (ES)**

• **GUTIERREZ PEREZ-DE-EULATE, NATALIA**
**20870 ELGOIBAR (GUIPUZCOA) (ES)**
• **ZELAIETA GARATE, OIER**
**20870 ELGOIBAR (GUIPUZCOA) (ES)**

(74) Representative: **Plasseraud IP**
**66, rue de la Chaussée d'Antin**
**75440 Paris Cedex 09 (FR)**

(54) **ULTRAVIOLET RESIN, COMPOSITES PRODUCED WITH SAID RESIN, AND PRODUCTION METHOD THEREOF**

(57) The present invention provides an ultraviolet resin for producing pre-pregs and composites, comprising a mixture of a dipropylene glycol diacrylate (DPGDA)-based resin, a dicyclopentadiene (DCPD)-based resin, a hexanediol diacrylate (HDDA)-based resin, and an acyl phosphine oxide photoinitiator (bis(2,4,6-trimethylbenzoyl)-phenylphosphineoxide). This ultraviolet resin is characterised in that the compounds of the resin are in the following ranges of percentages by weight in the ultraviolet resin: DPGDA (40-90%), DPCD (5-30%), HDDA (10-50%), and acyl phosphine oxide (bis(2,4,6-trimethylbenzoyl)-phenylphosphineoxide) (0.25-5%). This ultraviolet resin exhibits an optimal curing behaviour which allows overcoming the limitations of the ultraviolet resins of the state of the art for producing pre-pregs and composites, particularly in automatic installations.

Fig. 4

EP 4 122 986 A1

(52) Cooperative Patent Classification (CPC): (Cont.)

C-Sets
**C08L 35/02, C08L 35/02, C08L 45/00,
C08K 5/5397;
C08L 67/06, C08L 67/06, C08L 45/00,
C08K 5/5397**

**Description**

**Sector of the art**

The present invention belongs to the field of resins, more specifically to the field of resins for producing composites, and relates to an ultraviolet resin with a specific composition having optimal properties for producing composites. The invention also relates to pre-pregs and composites comprising said ultraviolet resin.

**State of the art**

Ultraviolet resins are currently used in a great number of applications, for example, as coatings, inks, adhesives, or for producing composite materials along with reinforcement fibres. One of the uses of ultraviolet resins is as a matrix for producing composite materials (composites). Composites are corrosion-resistant materials having a good balance between their mechanical properties and their low weight density, which makes them appealing materials used in a great number of fields such as in the nautical field, aeronautical field, automotive field, renewable energies, civil engineering, etc.

These composite materials or composites are formed by a resin matrix which impregnates and coats reinforcement fibres. The combination and interaction between the resin matrix and the reinforcement fibres is what renders the composites their characteristic properties.

Among the resins to be used for producing composites, ultraviolet resins can be used. Ultraviolet resins are resins that are cured or hardened under ultraviolet (UV) light or direct sunlight. These ultraviolet resins are applied in liquid form, allowing the impregnation of the fibres to be reinforced, which resin is then cured or solidified by means of the action of ultraviolet radiation. Ultraviolet-cured resins provide certain advantages with respect to conventionally cured resins including, for example, the capacity to cure the resin with a lower energy input, at a lower temperature, in a quicker manner, and in smaller spaces; as well as its lower environmental impact. A wide variety of ultraviolet resins are known today, some examples being acrylic epoxy resins, acrylic polyesters, acrylic urethanes, or acrylic silicones. There is also a large variety of reinforcement fibres which can be used for producing composite materials such as, for example, natural fibres, carbon fibres, glass fibres, aramid fibres, cellulose fibres, mineral fibres, etc.

There are several methodologies for producing reinforced composite resins. Briefly and by way of example, one methodology for producing composites of the state of the art consists of producing these composites by means of pre-impregnating the fibres with the resin (producing pre-pregs). Subsequently, said pre-pregs can be stacked and the ultraviolet resin can be cured with ultraviolet radiation, thereby obtaining the final reinforced composite resin. This process can be performed both manually and in an automated manner in automatic installations.

It has been observed that the properties of the ultraviolet resin used are one of the factors that have the most influence on the speed of the production process and on the attainment of optimal composites by means of said process. In fact, the ultraviolet resin has an influence on different aspects of the composite production process.

Some of these aspects that are influenced by the ultraviolet resin to be used are listed below according to the chronological order of the steps of the composite production process:

1) **Impregnation speed:** The speed of the production process is affected by the speed at which the resin impregnates the fibres, with the viscosity of the resin having to be low or fluid enough to allow a quick impregnation of the fibres of the composite.

2) **Degree of pre-curing in a short time:** The resins must not exhibit degrees of curing that are too high in a short time, since this translates into an insufficient time for preparing the pre-pregs with fibres and a degree of curing of the pre-pregs that is too high which presents delamination problems during the pre-preg adhesion step for producing the final composite.

3) **Tackiness:** The resin must have enough tackiness for it to adhere to areas of the mould that are not flat during the production of the composites with the pre-pregs, or otherwise, only flat parts could be produced with said resins.

4) **Rollability:** It is important for the pre-preg resulting from the impregnation of the fibres with the resin to be readily rollable to facilitate storage and handling thereof. In addition, this allows the pre-pregs to be adapted to the curves of the mould to elaborate composites that are not flat.

5) **Complete ultraviolet curing speed:** Once the pre-pregs have been adhered to one another to produce the final composite, the speed at which complete or almost complete curing is achieved by means of ultraviolet radiation must be fast enough so that this step does not limit the speed of the production process. This is particularly relevant for automated production in automatic installations, unlike manual production processes.

Nevertheless, it has been observed that the ultraviolet resins of the state of the art have limitations in terms of the aspects or properties listed above, with there being no knowledge of any resin that meets all of said aspects or properties despite them being important requirements for producing pre-pregs and composites in automatic installations.

There is therefore a need in the state of the art to obtain ultraviolet resins with all these improved properties, in other words, to obtain an optimally cured resin to produce pre-pregs and composites in an automatic installation.

Therefore, the objective of the present invention is to provide, as a matter of fact, an optimally cured ultraviolet resin for producing both pre-pregs and composites, particularly in an automatic installation, which allows overcoming the preceding limitations of the ultraviolet resins known in the state of the art.

### Object of the invention

The present invention provides an ultraviolet resin with optimal curing behaviour which allows overcoming the aforementioned limitations of the ultraviolet resins of the state of the art for the production of pre-pregs and composites, particularly in automatic installations. To this end, an ultraviolet resin consisting of a mixture of four compounds, specifically of three resins and one photoinitiator, is provided.

For the resin of the invention, specific ranges of percentage of the composition (by weight) are furthermore selected for each of these four compounds, and these ranges are specified in Table 1 below:

| Compound of the ultraviolet resin | Range by weight of the compound (%) |
|---|---|
| DPGDA | 40 - 90% |
| DPCD | 5 - 30% |
| HDDA | 10-50% |
| Irgacure 819® Photoinitiator | 0.25 - 5% |

Table 1. List of the 4 compounds comprised in the ultraviolet resin of the invention in the specific ranges of percentage defining the ultraviolet resin of the invention

The selection of these particular ranges of percentages by weight for each of the 4 compounds results in a series of technical advantages or features, therefore optimising, for the resin of the invention, the fabric impregnation speed, the degree of pre-curing in a short time, the curing speed, and the tackiness and rollability of the pre-pregs made of reinforced fibres obtained by means of the ultraviolet resin of the invention.

In summary, the invention provides an optimally cured ultraviolet resin for producing pre-pregs and composites, particularly in an automatic installation.

A first embodiment of the invention provides an ultraviolet resin for producing pre-pregs and composites, comprising a mixture of a dipropylene glycol diacrylate (DPGDA)-based resin, a dicyclopentadiene (DCPD)-based resin, a hexanediol diacrylate (HDDA)-based resin, and an acyl phosphine oxide photoinitiator (bis(2,4,6-trimethylbenzoyl)-phenylphosphineoxide) sold under the trade name Irgacure 819®.

This ultraviolet resin is characterised in that the compounds of the resin are in the following ranges of percentages by weight in the ultraviolet resin: DPGDA (40-90%), DPCD (5-30%), HDDA (10-50%), and bis(2,4,6-trimethylbenzoyl)-phenylphosphineoxide (0.25-5%) sold under the trade name Irgacure 819®.

In a second embodiment, the ultraviolet resin for producing pre-pregs and composites has the compounds of the resin in the following ranges of percentages by weight in the resin: DPGDA (65-85%), DPCD (5-15%), HDDA (15-35%), and bis(2,4,6-trimethylbenzoyl)-phenylphosphineoxide (0.5-2%) sold under the trade name Irgacure 819®.

In a third embodiment, the ultraviolet resin for producing pre-pregs and composites further comprises adding one or more additives in an amount comprised between 20 and 70% by weight with respect to the total of the resin.

A fourth embodiment provides a method for preparing the ultraviolet resin according to any one of the preceding embodiments, which consists of mixing the compounds DPGDA, DPCD, HDDA, and bis(2,4,6-trimethylbenzoyl)-phenylphosphineoxide sold under the trade name Irgacure 819®, where all these compounds are mixed under stirring.

In a fifth embodiment, the method comprises mixing under stirring for 5-20 minutes.

In a sixth embodiment, the method comprises mixing under stirring at a stirring speed between 300 and 2000 rpm.

In a seventh embodiment, the method comprises mixing under stirring at a temperature between 20 and 50°C.

An eighth embodiment provides a method for producing pre-pregs by means of the ultraviolet resin according to any one of the first three embodiments.

A ninth embodiment provides a method for producing composites by means of the ultraviolet resin according to any one of the first three embodiments.

A tenth embodiment provides a composite produced with the ultraviolet resin according to the method of the ninth embodiment.

**Description of the figures**

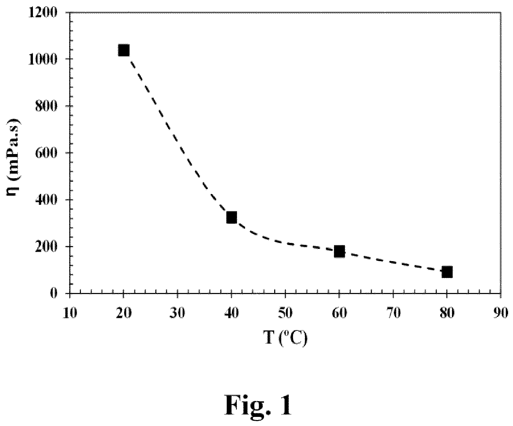

Figure 1 shows the viscosity ($\eta$ (mPa.s)) of the optimal ultraviolet resin of the invention (Example 1) as a function of temperature (T (°C)). This viscosity was measured by means of a rotational viscometer.

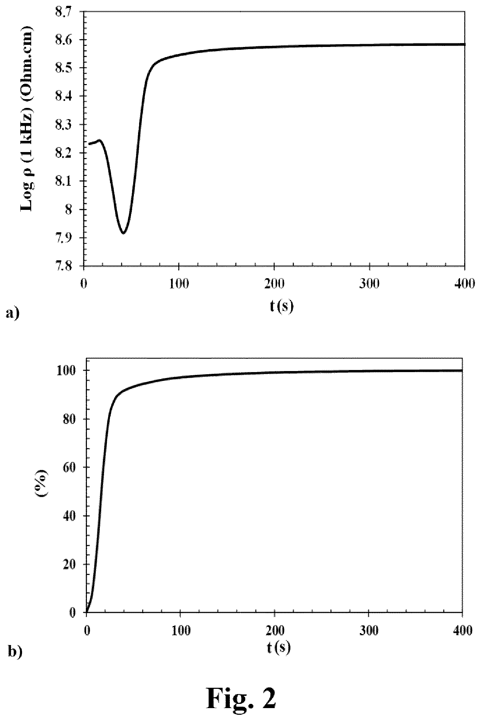

Figure 2 shows the measured values for the optimal ultraviolet resin of the invention (Example 1), as a function of curing time (in seconds), the logarithm of ion viscosity p (Figure 2a), and the degree of curing (Figure 2b) of said resin. The degree of curing was calculated from the ion viscosity. This ion viscosity was measured by means of dielectric analysis (DEA).

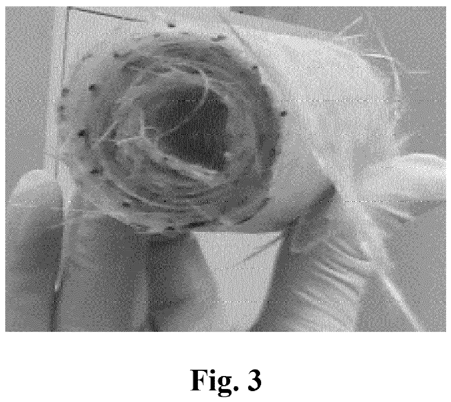

Figure 3 shows the qualitative evaluation of the rollability of the pre-cured pre-pregs made of reinforcement fibres with the ultraviolet resin of the invention (Example 1). The figure shows a spool of said pre-pregs, in which no cracking or whitening of the impregnated and pre-cured fabrics are observed.

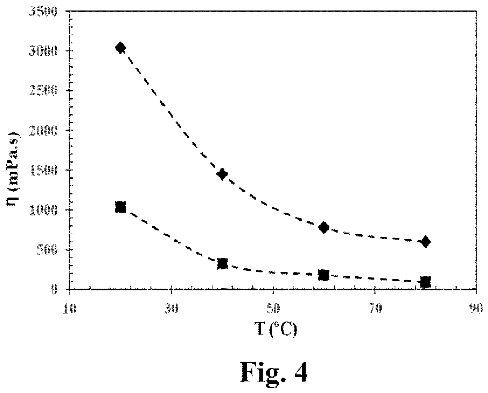

Figure 4 shows the viscosity ($\eta$ (mPa.s)) of two ultraviolet resins as a function of temperature (T(°C)); both for the optimal ultraviolet resin of the invention (Example 1, curve with square markers), and for a non-optimal resin outside the ranges of percentages of the compounds of the invention (Example 2, curve with rhombus markers). This viscosity was measured for both resins by means of a rotational viscometer.

**Detailed description of the invention**

The present invention provides an ultraviolet resin with optimal curing behaviour which allows overcoming the aforementioned limitations for the production of pre-pregs and composites, particularly in automatic installations. To this end, an ultraviolet resin consisting of a mixture of four compounds, specifically of three resins and one photoinitiator, is provided.

The three resins which are part of the ultraviolet resin of the invention are a dipropylene glycol diacrylate (DPGDA)-based photocurable polyester resin, another dicyclopentadiene (DCPD)-based photocurable polyester resin, and a hexanediol diacrylate (HDDA)-based acrylic monomer. The fourth compound is the photoinitiator bis(2,4,6-trimethylbenzoyl)-phenylphosphineoxide, sold on the market by the company BASF under the trade name *"Irgacure 819®"*.

For the resin of the invention, specific ranges of percentage of the composition (by weight) are furthermore selected for each of its four compounds, and these ranges are specified in Table 1 below.

Table 1. List of the 4 compounds comprised in the ultraviolet resin of the invention in the specific ranges of percentage defining the ultraviolet resin of the invention

| Compound of the ultraviolet resin | Range by weight of the compound (%) |
| --- | --- |
| DPGDA | 40 - 90% |
| DPCD | 5 - 30% |
| HDDA | 10-50% |
| Irgacure 819® Photoinitiator | 0.25 - 5% |

According to the invention, it has been observed that, surprisingly, the selection of these ranges of percentage of the composition for each of these 4 compounds of the ultraviolet resin provides said resin with a series of technical features that are not seen in the resin of different percentages, allowing the limitations of the ultraviolet resins of the state of the art to be overcome. Said associated technical features or technical advantages which allow said limitations to be overcome are set forth below for the ultraviolet resin of the invention:

1) **Optimised impregnation speed:** The ultraviolet resin of the invention has an optimised viscosity, such that it exhibits a balance between a high impregnation capacity with different glass fibre fabrics and a good thixotropy for automatic resin application.

2) **Optimised degree of pre-curing in a short time:** The ultraviolet resin of the invention allows for the possibility of achieving low degrees of curing of between 1 and 5% (pre-curing) by UV radiation in a short time of between 0.1 s and 5 s. This is important because if the degree of curing in a short time were higher, optimal pre-pregs could not be prepared for the subsequent production of composites.

3) **Optimised tackiness:** Optimised tackiness of the resin when impregnating glass fibres and being pre-cured with degrees of curing of 1 to 5%, allowing the pre-pregs to properly adhere to the areas of the mould that are not flat, and thereby the production of composites that are not flat. Tackiness was evaluated qualitatively for a pre-cured pre-preg made of glass fibres reinforced with the ultraviolet resin of the invention (Example 1). Specifically, tackiness was evaluated qualitatively by observing the adhesion of the pre-cured pre-preg to the latex of a latex glove, which confirms a suitable tackiness of said pre-preg with the resin of the invention (Example 1).

4) **Optimised rollability:** The resin provides the pre-pregs with the ability to be rolled (spooled up) with degrees of curing of 1 to 5%, which allows the pre-preg to be adapted to moulds that are not flat, in addition to facilitating pre-preg handling and storage.

5) **Optimised curing speed:** Possibility of achieving degrees of curing close or equal to 100% by means of the application of UV radiation, in less than 100 s, which prevents this step from being a time-limiting step, something which is particularly relevant for producing composites in an automated installation.

In summary, these technical features or advantages make the resin of the invention an optimally cured ultraviolet resin for producing reinforced composites, particularly in an automatic installation.

The degree of curing is monitored by measuring the curing conductivity ($\sigma$) of a resin. Under the influence of an electric field applied through a dielectric sensor, ions flow through the resin. The flow of ions under the influence of an electric field is the responsibility of the conductive current, therefore, of the conductivity ($\sigma$) and the opposite thereof, i.e., resistivity or ion viscosity ($\rho$). As the resin cures, more and more molecules interconnect with one another, creating a cross-linked network which increases the viscosity ($\eta$) of the resin and at the same time restricts the flow of the ions, which in turn reduces its conductivity ($\sigma$), or in other words, increases its resistivity or ion viscosity ($\rho$).

Resistivity or ion viscosity is calculated directly as the opposite of the conductivity ($\sigma$) of the resin by means of the following formula:

$$\rho = \frac{1}{\sigma}$$

For dielectric curing control, it is advisable to observe the viscosity of the ions, which is simply the frequency-independent resistivity ($\rho$), in other words, the opposite of frequency-independent conductivity ($\sigma$). When the physical viscosity ($\eta$) of a polymer increases due to the curing process, the ion viscosity ($\rho$) presented by means of the ionic current also increases. This relationship is the principle behind the usefulness of dielectric curing monitoring in polymer materials, and enables the degree of curing to be observed.

The degree of curing is conventionally measured by means of ion viscosity ($\rho$), a characteristic parameter of the dielectric analysis of the resin. Thus, the degree of curing ($\alpha$) is mathematically defined based on ion viscosity ($\rho$) by means of the following formula:

$$\alpha(t) = (\log \rho_t - \log \rho_0)/(\log \rho_\infty - \log \rho_0)$$

where $\alpha$ ($\tau$) is the degree of curing of the resin after a curing time t, $\rho_0$ is the initial ion viscosity of the uncured resin, $\rho_t$ is the ion viscosity measured or calculated at a curing time t, and $\rho_\infty$ is the ion viscosity measured or calculated for a very long curing time $\infty$.

Surprisingly, these technical effects are even further optimised in preferable ranges of percentage of the composition for the 4 compounds making up the ultraviolet resin of the invention, these ranges being those shown in Table 2 below.

Table 2. List of the 4 compounds comprised in the ultraviolet resin of the invention in the preferable specific ranges of percentage which optimise the technical effects.

| Compound of the ultraviolet resin | Range by weight of the compound (%) |
|---|---|
| DPGDA | 65 - 85% |
| DPCD | 5-15% |
| HDDA | 15-35% |
| Irgacure 819® Photoinitiator | 0.5 - 2% |

Optionally, all type of additives can be added to the ultraviolet resin of the invention. By way of non-limiting example, the addition of a flame retardant additive to the resin is contemplated, such as flame retardants. An example of commercial flame retardants are those of the Apyral® range (aluminium hydroxide) supplied by NabaltecAG (Apyral®

20X, Apyral® 22, Apyral® 30X, Apyral® 33, etc.). Other additives which can be added to the ultraviolet resin of the invention, both individually and in combination, are all the additives suitable for ultraviolet resins known in the state of the art. These additives include, for example, all type of stabilisers, ultraviolet absorbers, catalysts, inhibitors, plasticisers, antioxidants, pigments, etc.

In a preferred embodiment, the addition of one or more additives in an amount comprised between 20 and 70% by weight with respect to the total of the resin to the ultraviolet resin of the invention is contemplated.

Any method for preparing the resin comprising at least the 4 compounds in the aforementioned percentages is contemplated. By way of example, the resin can be prepared by means of mixing the 4 compounds under stirring, in any order of addition. Mixing can be performed at any stirring speed (rpm) and for any stirring time (min). Since it is an ultraviolet-cured resin, stirring can be brought to any temperature, for example, room temperature, since the resin would not cure without the presence of an ultraviolet radiation source.

In a preferred embodiment, mixing is performed by adding the 4 compounds of the ultraviolet resin one by one. In another preferred embodiment, mixing is performed at a stirring speed of between 300 and 2000 rpm. In another preferred embodiment, mixing is performed for 5-20 minutes. In a last preferred embodiment, mixing is performed at a temperature between 20 and 50°C. These three parameters (mixing speed, mixing time, and mixing temperature) independently have a direct effect on the attainment of a more homogeneous ultraviolet resin mixture, such that the properties of the ultraviolet resin are homogeneous throughout the entire volume thereof. In fact, it is advantageous to provide, during the mixing of the components of the ultraviolet resin, sufficient mixing speed, mixing time and mixing temperature so as to homogenise the components of the mixture in the resulting ultraviolet resin.

The ultraviolet resin of the invention can be used to produce fibre-reinforced composite materials (composites). All types of reinforcement fibres are contemplated among the fibres contemplated for the production of composites according to the invention. Non-limiting examples of said reinforcement fibres can be natural fibres, glass fibres, aramid fibres, cellulose fibres, mineral fibres, etc., as well as MAT fabrics, woven fabrics, non-crimp fabrics (NCFs), or the combinations thereof. By way of non-limiting example, the fibre content of the composite can be comprised between 20 and 70% of the weight of the final composite.

A second aspect of the invention relates to a method for producing pre-pregs and composites by means of the ultraviolet resin of the invention. This resin can be used to produce all types of pre-pregs or composites by means of production methods of the state of the art.

In the next preferred embodiment of the invention, a method for producing composites made of fibre reinforced with the ultraviolet resin of the invention is described. This method for producing composites consists of the following two steps:

a) A first step in which a "pre-preg" made of the reinforcement fibres with the ultraviolet resin of the invention is produced.

b) A second step in which the final composite made of fibres reinforced with the ultraviolet resin of the invention is produced by means of stacking and subsequently curing the pre-pregs obtained in step a).

Both steps are described in detail below:

Step a) Producing the pre-preg

- a.1) Impregnation: First, the ultraviolet resin according to the invention is applied on the fibres that will become part of the final composite, giving rise to a pre-preg with a fibre content of between 20 and 70% by weight with respect to the ultraviolet resin. Any type of impregnation for impregnating reinforcement fibres with the resin contemplated in the state of the art is contemplated. In a preferred embodiment, impregnation can be performed manually by dispersing the resin in the fabric by means of different mechanical tools, or automatically in a prototype designed for that purpose.
- a.2) Pre-curing the pre-preg: Next, the pre-preg is irradiated with ultraviolet light for the time required to achieve a degree of curing of between 1% and 5%.
- a.3) Storage: The pre-preg produced can be stored indefinitely in the form of a spool and protected from light by means of materials that are opaque to light (stored from this step a.3), or can be used for producing stacked pre-pregs or composites right after the production thereof (step b).

Step b) Producing the composite

- The final composite is produced from stacking the pre-pregs produced in the preceding step (step a) one on top of another, by means of applying pressure (from 0.5 to 6 bar) and ultraviolet radiation (from 0.2 to 25 W/cm$^2$), either simultaneously or consecutively. The composite can be produced using any of the tools or equipment known to that end in the state of the art. Thus, the composite can be produced, for example, by means of a vacuum bag, by means of a membrane made of a deformable material, by means of a rigid tool, etc.

Thus, a third aspect of the invention relates to the composite produced by means of the ultraviolet resin of the invention.

A practical example of an optimal ultraviolet resin with a percentage of the 4 compounds within the ranges of the invention (Example 1), and a practical example of a non-optimal ultraviolet resin the percentage of the 4 compounds of which is outside the ranges of the invention (Example 2), are shown below. In conclusion, the examples allude to the fact that only the ultraviolet resins with percentages within the ranges of the invention (Example 1) show the characterising technical effects of the ultraviolet resin of the invention.

Lastly, it must be taken into account that this document only describes some embodiments of the invention, so one skilled in the art will understand that other equivalent or alternative embodiments of the invention, as well as their obvious or equivalent modifications, are also possible. Therefore, the scope of the aspects of the invention must not be limited to the particularly described specific embodiments.

**Example 1 (optimal resin)**

The preparation of an ultraviolet resin according to the invention is described below.

To this end, the required amount of each of the 4 compounds of the ultraviolet resin representing the following percentages by weight of the compound shown in Table 3 was mixed under stirring.

Table 3. List of the 4 compounds comprising the optimal ultraviolet resin of Example 1, with their specific percentages within the range of percentages of the invention.

| Compound of the ultraviolet resin | Percentage by weight of the compound (%) |
| --- | --- |
| DPGDA | 76.34 |
| DPCD | 7.63 |
| HDDA | 15.27 |
| Irgacure 819® Photoinitiator | 0.76% |

As can be seen, the 4 compounds are within the ranges of percentage by weight characterising the invention.

The 4 compounds were mixed under stirring for 15 minutes at a stirring speed of 600 rpm and a temperature of 30°C.

After the preparation of the resin, the characterisation of those properties of the resin which result in the characterising technical effects of the ultraviolet resin of the invention was performed.

Viscosity (Example 1)

The viscosity of the ultraviolet resin of Example 1 was measured by means of a rotational viscometer. The graph of Figure 1 shows the curve of the viscosity of said resin as a function of temperature. These viscosity values are suitable for the quick impregnation of the pre-pregs made of reinforced fibres.

Curing behaviour (Example 1)

As discussed above, the degree of curing is conventionally measured by means of ion viscosity ($\rho$), a characteristic parameter of the dielectric analysis of the resin. Thus, the degree of curing ($\alpha$) is mathematically defined based on ion viscosity ($\rho$) by means of the following formula:

$$\alpha(t) = (\log \rho_t - \log \rho_0)/(\log \rho_\infty - \log \rho_0)$$

Where $\alpha(t)$ is the degree of curing of the resin after a curing time t, $\rho_0$ is the initial ion viscosity of the uncured resin, $\rho_t$ is the ion viscosity measured or calculated at a curing time t, and $\rho_\infty$ is the ion viscosity measured or calculated for a very long curing time ∞.

And wherein resistivity or ion viscosity is calculated directly as the opposite of the conductivity ($\sigma$) of the resin by means of the following formula:

$$\rho = \frac{1}{\sigma}$$

Figure 2 shows the value of ion viscosity (Figure 2a) and the degree of curing (Figure 2b) of the ultraviolet resin of Example 1 as a function of time. It can be seen in Figure 2b that the degree of curing for the resin of the invention is low for a short time (0.1-0.5 s), while reaching at the same time high degrees of curing in a relatively short time (100 s).

Impregnation of the fibres (Example 1)

The degree of impregnation of the fibres with the ultraviolet resin of Example 1 was assessed for several types of fabric, specifically for MAT fabrics, woven fabrics, and non-crimp fabrics (NCFs) made of glass fibre. It has been qualitatively observed that this resin wets an entire fabric area measuring 100 mm$^2$ in a time of 3 seconds. This impregnation speed is suitable, with impregnation speed considered as being suitable as long as it is equal to or less than 10 seconds.

Tackiness (Example 1)

The surface tackiness of the pre-cured pre-pregs made of fibres reinforced with the resin of Example 1 has been qualitatively assessed. Tackiness is deemed suitable when adherence of the pre-preg to another surface, for example to the mould, is achieved without causing the pre-preg to become unimpregnated or damaged when it is peeled off. It has been qualitatively observed that the prepared pre-pregs have a suitable tackiness. Specifically, tackiness was evaluated qualitatively by observing the adhesion of the pre-cured pre-preg to the latex of a latex glove, which confirms a suitable tackiness of said pre-preg with the resin of the invention (Example 1).

Rollability (Example 1)

The rollability of the pre-cured pre-pregs made of fibres reinforced with the resin of Example 1 has been qualitatively assessed. Rollability is deemed suitable when the pre-cured pre-pregs can be spooled up without causing cracks or whitening of the pre-preg fabric. A suitable spool of the pre-preg prepared with the resin of Example 1 can be seen in Figure 3, the pre-preg being wound without showing any cracks or whitening.

**Example 2 (non-optimal resin):**

Example 2 shows an ultraviolet resin consisting of these same 4 compounds, but in which their percentages by weight are not within the ranges defined by the present invention. The result is a non-optimal resin which does not have the technical effects described above. The specific percentages for the resin of Example 2 are shown in Table 4.

Table 4. List of the 4 compounds comprised in the ultraviolet resin of Example 2 in the specific ranges of percentage outside the ranges of percentage defined for the ultraviolet resin of the invention.

| Compound of the ultraviolet resin | Percentage by weight of the compound (%) |
|---|---|
| DPGDA | 94.06 |
| DPCD | 1.98 |
| HDDA | 2.97 |
| Irgacure 819® Photoinitiator | 0.99 |

This example is merely descriptive and must not be interpreted as a limiting example since other percentages of the different compounds outside the ranges defined by the invention would not result in said technical effects either.

The 4 compounds were mixed under stirring in conditions similar to those of Example 1. After the preparation of the resin of Example 2, the characterisation of this non-optimal resin was performed in a similar manner to the characterisation of the ultraviolet resin of the invention of Example 1.

Viscosity (Example 2)

The viscosity of the ultraviolet resin of Example 2 was measured by means of a rotational viscometer in the same conditions as the viscosity already measured for the ultraviolet resin of Example 1. The graph of Figure 4 shows the curve of the viscosity of both resins as a function of temperature. Viscosity is presented both for the non-optimal ultraviolet resin of Example 2 (curve with rhombus markers of Figure 4) and for the optimal ultraviolet resin of Example 1 (curve with square markers of Figure 4, located right below the curve of Example 2). It should be highlighted that the viscosity values of the resin of Example 2 do not allow a suitable impregnation of the fibres. In fact, the viscosity values are too high and give rise to heterogeneities in the amount of resin, obtaining excessive or insufficient pre-cured products, and accordingly a pre-preg fabric with unsuitable rollability and surface tackiness.

The result is that the pre-preg fabric cannot be spooled up, nor can it be adhered throughout the entire surface thereof.

**Claims**

1.   An ultraviolet resin for producing pre-pregs and composites, comprising the following mixture of compounds:

a) Dipropylene glycol diacrylate (DPGDA)-based resin,
b) Dicyclopentadiene (DCPD)-based resin,
c) Hexanediol diacrylate (HDDA)-based resin,
d) Acyl phosphine oxide photoinitiator, bis(2,4,6-trimethylbenzoyl)-phenylphosphineoxide,

wherein the compounds of the resin are in the following ranges of percentages by weight in the ultraviolet resin:

a) DPGDA (40-90%),
b) DPCD (5-30%),
c) HDDA (10-50%),
d) bis(2,4,6-trimethylbenzoyl)-phenylphosphineoxide.

2.   The ultraviolet resin for producing pre-pregs and composites according to claim 1, wherein the compounds of the resin are in the following ranges of percentages by weight in the resin:

a) DPGDA (65-85%),
b) DPCD (5-15%),
c) HDDA (15-35%),
d) bis(2,4,6-trimethylbenzoyl)-phenylphosphineoxide.

3.   The ultraviolet resin for producing pre-pregs and composites according to any one of claims 1-2, which further comprises adding one or more additives in an amount comprised between 20 and 70% by weight with respect to the total of the resin.

4.   A method for preparing the ultraviolet resin according to any one of claims 1-3, which consists of mixing the compounds DPGDA, DPCD, HDDA, and bis(2,4,6-trimethylbenzoyl)-phenylphosphineoxide under stirring.

5.   The method for preparing the ultraviolet resin according to claim 4, wherein the mixture is mixed under stirring for 5-20 minutes.

6.   The method for preparing the ultraviolet resin according to any one of claims 4-5, wherein the mixture is mixed at a stirring speed between 300 and 2000 rpm.

7.   The method for preparing the ultraviolet resin according to any one of claims 4-6, wherein the mixture is mixed at a temperature between 20 and 50°C.

8.   A method for producing pre-pregs by means of the ultraviolet resin according to any one of claims 1-3.

9.   A method for producing composites by means of the ultraviolet resin according to any one of claims 1-3.

10. A composite produced with the ultraviolet resin according to the method of claim 9.

**Fig. 1**

a)

b)

# Fig. 2

**Fig. 3**

Fig. 4

Europäisches
Patentamt

European
Patent Office

Office européen
des brevets

## EUROPEAN SEARCH REPORT

Application Number

EP 21 38 2661

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2004/010061 A1 (HEWITT JOHN C [US] ET AL) 15 January 2004 (2004-01-15) <br> * paragraph [0018] * <br> * paragraph [0026] - paragraph [0027] * <br> * paragraph [0039]; example 6 * <br> * paragraph [0034]; example 1 * <br> * paragraph [0037]; example 4 * <br> ----- | 1-10 | INV. <br> C08L35/02 <br> C08L67/06 |
| A | US 2009/035595 A1 (GLOECKNER PATRICK [DE] ET AL) 5 February 2009 (2009-02-05) <br> * claim 1 * <br> ----- | 1-10 | |
| A | CN 109 734 890 A (CHANGZHOU HUAKE POLYMERS CO LTD) 10 May 2019 (2019-05-10) <br> * claim 1 * <br> ----- | 1-10 | |

TECHNICAL FIELDS
SEARCHED      (IPC)

C08L
C08J

The present search report has been drawn up for all claims

| Place of search | Date of completion of the search | Examiner |
|---|---|---|
| The Hague | 10 January 2022 | Flores de Paco, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 38 2661

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2022

| Patent document cited in search report | | Publication date | Patent family member(s) | | | Publication date |
|---|---|---|---|---|---|---|
| US 2004010061 | A1 | 15-01-2004 | AU | 2003233571 | A1 | 12-12-2003 |
| | | | EP | 1511465 | A1 | 09-03-2005 |
| | | | US | 2004010061 | A1 | 15-01-2004 |
| | | | WO | 03099257 | A1 | 04-12-2003 |
| US 2009035595 | A1 | 05-02-2009 | BR | PI0515974 | A | 12-08-2008 |
| | | | CA | 2584182 | A1 | 20-04-2006 |
| | | | CN | 1878814 | A | 13-12-2006 |
| | | | DE | 102004049544 | A1 | 13-04-2006 |
| | | | EP | 1799742 | A1 | 27-06-2007 |
| | | | JP | 2008516065 | A | 15-05-2008 |
| | | | KR | 20070068362 | A | 29-06-2007 |
| | | | TN | SN07132 | A1 | 21-11-2008 |
| | | | US | 2009035595 | A1 | 05-02-2009 |
| | | | WO | 2006040210 | A1 | 20-04-2006 |
| CN 109734890 | A | 10-05-2019 | NONE | | | |

EPO FORM P0459